# EUROPEAN PATENT APPLICATION

(11) **EP 3 777 540 A2**
(43) Date of publication of application: **17.02.2021**
(21) Application number: 20196114.1
(22) Date of filing: 24.09.2013
(51) Int. Cl.: A21B 1/48, A23B 4/052, A23L 3/3454, A23L 5/10, A23L 27/27

(54) **COMBINATION OF COOKING AND SMOKING**

(30) Priority: 25.09.2012 EP 12185955; 07.01.2013 EP 13150399; 08.01.2013 EP 13150464
(62) Divisional of application: 13770671.9
(71) Applicant: GEA Food Solutions Bakel B.V., 5761 EN Bakel (NL)
(72) Inventor: Verbruggen, Paul, 5706 MD Helmond (NL); Kop, Ben, 5296 LR Esch (NL)
(74) Representative: Kutzenberger Wolff & Partner

(57) **Abstract**

Oven (1) comprising:

- at least one chamber (3, 4) in which the product is cooked- conveyor means (7) with for guiding products from the inlet (10) through this chambers (3, 4) to the outlet (12),- temperature control means (15) for adjusting and controlling the temperature and the humidity in the chamber using air (23) and steam, which comprise a heater (34) to heat the air (23), a blower (16) and a duct (18) to introduce the heated gas into the chamber (3, 4), wherein it comprises means (27, 28) to atomize a smoking- and/or a flavoring-liquid into the oven,wherein the means (27, 28) is a two phase nozzle and wherein the conveyor means is an endless belt which is permeable for the air, steam and the smoking- and the flavoring-substance and wherein the oven operates continuously.

## Description

The present invention relates to an oven comprising:
- at least one chamber,
- preferably conveyor means for guiding products from the inlet through this chambers to the outlet,
- temperature control means for controlling the temperature and/or humidity in the chamber using a gas, which comprises a heater to heat the fluid, a blower and a duct to introduce the heated fluid into the chamber,

The present invention further relates to a process how to operate this oven.

An oven of this type is for example known from EP 1 221 575 and EP 0 558 151and is suitable for the complete or partial cooking of edible products, especially protein containing products, like chicken, hamburgers, cordon bleu etc. The above-mentioned patent applications are herewith included by reference and are therefore part of the disclosure of the present patent application. The temperature and humidity can be set such, that during the residence time in the oven, which is dependent on the length and velocity of the conveyor belt, the desired cooking and, if needed, browning is effected. Nowadays, the market has an increasing demand for smoked and/or flavored products. This smoking and/or flavoring is, according to the state of the art carried out after or before the product is cooked, off line in a separate smoking- and/or flavoring house, which is time consuming and requires a lot of space.

It is therefore an objective of the present invention to provide an oven and a process that overcomes the deficiencies according to the state of the art.

The problem is solved with an oven comprising:
- at least one chamber,
- conveyor means with for guiding products from the inlet through these chambers to the outlet,
- temperature control means for adjusting controlling the temperature and/or humidity in the chamber using a gas, which comprises a heater to heat the gas, a blower and a duct to introduce the heated gas into the chamber,
wherein it comprises means to atomize a smoking- and/or a flavoring-liquid in the oven.

The disclosure made regarding this subject matter of the present invention also applies to the other subject matters of the present application and vice versa.

Due to the smoking and/or flavoring in the oven, the production time is reduced and the product has an improved flavor and/or an improved appearance. The risk for the personnel and/or the production facility is reduced due to the inventive oven and/or process. It was surprising and could not have been expected by a person skilled in the art that it is possible to apply a smoking- and/or a flavoring-liquid directly to the oven, without polluting the oven. The smoking- and/or flavoring-liquid is not destroyed in the oven and/or the adsorption of the smoke/flavor to the product is sufficient to achieve the desired taste. The atomization of the smoking- and/or flavoring-liquid leads to a complete evaporation of the smoking- and/or a flavoring-liquid, so that no liquid needs to be gathered and dumped or recycled. The smoking- and/or flavoring-liquid can be dosed very precisely.

The oven according to the present invention comprises at least one chamber, preferably two or more chambers. In each chamber a zone with different heat-transfer-, temperature-, humidity- and/or smoking/flavoring-conditions can be established. The product to be treated is preferably food, more preferably protein-containing food like meat or fish. Alternatively, the product can be a vegetarian product, for example a meat- and/or fish-replacement-product. The product may comprise bones or fish-bones. The inventive oven further comprises conveyor means for guiding products from the inlet through this chamber to the outlet. The conveyor means is preferably at least partially arranged in a helical path. The conveyor means are preferably an endless conveyor belt, which more preferably is at least partially permeable for the process gas, i.e. air, steam and/or the smoke/flavoring-substance. Additionally, the inventive oven comprises temperature control means for adjusting and controlling the temperature and/or humidity in the chamber using a gas, which is normally a mixture of air and steam. The temperature of the gas is adjusted by a heater. The humidity of the gas is adjusted by adding steam or for example air with a low humidity. Preferably, the gas is circulated in the each chamber, preferably separately, preferably by a blower, which extracts the gas out of the chamber at one end and reintroduces the gas at another end. Due to this recirculation, there is a gas-motion in the chamber that improves the heat-transfer from the gas to the product and/or reduces temperature differences in each chamber. In the oven, the product can be dried and cooked. The drying/cooking can be at least partially simultaneously and/or subsequently.

The oven can be a continuously operating oven trough which the products are continuously moved or a batch-type oven.

According to the present invention, the product can be dried, before or while it is cooked. Drying according to the present invention means that the weight of the food product is reduced. The drying the food product can take place due to dripping of a substance from the product and/or due to evaporation of a substance from the surface of the product. Preferably, the weight loss of the product during the drying step is 0,5 - 30 weight-% relative to the initial weight of the product before it enters the drying chamber, more preferably 2 - 20 weight-%, even more preferably 3 - 10 weight-% and even more preferably 4,5 - 7,5 weight-%. The drying of the products is preferably done in a climatized chamber with exact temperature and humidity parameters. Preferably, the drying of the food product is carried out at a temperature in the range of 60-180°C. During the drying liquid smoke can be atomized in the drying chamber.

According to the present invention, the oven comprises means to atomize a smoking- and/or a flavoring-liquid in the oven. The smoking- and/or flavoring-liquid is preferably a water-like-substance. The means to atomize the smoking- and/or flavoring-liquid in the oven is preferably a nozzle, more preferably a two phase nozzle, which is operated with the smoking- and/or flavoring-liquid and a gas, preferably air. The two phase nozzle is preferably supplied with compressed air between 1 and 15 bar, more preferably 3 and 8 bar, even more preferably 4-6 bar. The ratio of the smoking- and/or flavoring-liquid-flow to the nozzle versus the gas-flow to nozzle is preferably 0,1 - 1,0 kg/m3, more preferably 0,3 - 0,6 kg/m3. The gas-flow to each nozzle is preferably set to 3,0 to 10,0 m³/h, more preferably 5,0 to 6,5 m³/h and the smoking- and/or a flavoring-liquid is preferably adjusted at a flow rate of 0,2 to 25 kg/h more preferably 1 to 10 kg/h, even more preferably 3-6 kg/h. The means to atomize the smoking- and/or flavoring-liquid can comprise one or more nozzles, for example an array of nozzles. The atomizing means may provide the atomized smoking- and/or a flavoring-liquid continuously or intermittently. The droplet-size of the atomized smoking- and/or a flavoring-liquid is preferably < 3,0 µm, more preferably < 1,5 µm and even more preferably < 1,0 µm. During the atomization, preferably part of the atomized smoking- and/or flavoring-liquid is ejected from each nozzle as a gas. This part is preferably less than 20 weight %, more preferably 14 -16 weight % of the smoking- and/or a flavoring-liquid supplied to the nozzle. The atomized smoking- and/or a flavoring-liquid-stream is preferably ejected into an air-flow which is circulated in one chamber of the oven, whereas the air-flow preferably has a temperature between 50 - 250° C, more preferably 100 -200 °C, particularly at the point of ejection of the smoking- and/or flavoring-liquid. The velocity of the air-flow at the point of ejection is preferably between 0,5 and 35 m/s more preferably between 1 and 9 m/s. At least one of the above described conditions assures a complete evaporation of the droplets.

After atomization, the particle size distribution of the droplet is preferably:

| | |
|---|---|
| < 0,20 µm | 1,99 % |
| < 0,50 µm | 6,26 % |
| < 0,60 µm | 22,48 % |
| < 0,70 µm | 45,89 % |
| < 0,85 µm | 69,37 % |
| < 1,00 µm | 86,70 % |
| < 5,00 µm | 100,00 % |

In the oven 100 % of the smoke condensate is transferred into an invisible gas phase.

Preferably, no means to capture overdosed smoking- and/or a flavoring-liquid need to be provided in the oven.

More preferably, the oven comprises two or more chambers, in which a different temperature, different humidity and/or different heat-transfer-conditions can be set, respectively. Preferably each chamber comprises a blower and heating means, whereas the blower and/or the heating means can be operated in each chamber separately. Preferably one or more chambers comprise a helical path and the chambers are more preferably separated from each other, particularly by a third chamber, which is more preferably a section with a straight conveyor belt. Preferably each chamber comprises at least one means to atomize a smoking- and/or a flavoring-liquid, whereas the smoking- and/or flavoring-liquid and/or the operation condition of the means, for example a nozzle, can be different in each chamber, respectively.

Preferably one means is located at the inlet and/or the outlet of the blower of one or each chamber and a smoking- and/or a flavoring-liquid is more preferably continuously fed to this means. More preferably, the smoking- and/or flavoring-liquid is atomized at the suction-side of the blower. In the blower, the droplets and/or the gas-phase of the smoking- and/or flavoring-liquid is mixed with the gas that cooks the product.

Alternatively or additionally, the smoking- and/or flavoring-liquid is directly sprayed on the product, preferably to part or at least essentially the entire surface of the product. In order to spray smoking- and/or a flavoring-liquid on the entire surface a multitude of nozzles might be needed. Preferably smoking- and/or a flavoring-liquid is sprayed through the transportation means on which the products are placed. Preferably, the distance between the means and the product is between 100 - 400 mm, preferably 150 and 350 mm. The surface temperature of the product is preferably larger than 50°C, more preferably larger than 80° C at the point at which the liquid is sprayed on the product, so that the liquid evaporates on the surface of the product. More preferably, the surface temperature of the product does not exceed 180°C in the oven. The smoking- and/or flavoring-liquid sprayed on the product can be the same as the smoking- and/or a flavoring-liquid atomized and vaporized in at least one chamber or can be different.

The means to spray the smoking- and/or a flavoring-liquid on the product is preferably a nozzle, more preferably a two phase nozzle.

This two phase nozzle for the spray-on-application is preferably fed with compressed gas, more preferably air at 2,0 - 4,5 bar, more preferably at 3,0 to 3,5 bar. The ratio of the smoking- and/or flavoring-liquid-flow to the nozzle versus the gas-flow to nozzle is preferably 0,5 - 5,0 kg/m³, more preferably 1,0 - 2,0 kg/m³. The pressurized gas-, preferably air flow rate to the nozzle is preferably 1,0 to 5,5 m³/h, more preferably 3,0 to 3,5 m³/h per nozzle and the smoking- and/or flavoring-liquid-flow to the nozzle is more preferably 2,0 to 8,0 kg/h and most preferably 4,0 to 6,0 kg/h. The particle size distribution is preferably between 5 µm and 100 µm, wherein more than 80 weight-% are preferably larger than 5 µm and at least 40% are more preferably larger than 10 µm. Preferably no smoking- and/or flavoring-liquid is directly vaporized by the nozzle.

Preferably accelerated millard- and thermal reactions developing a golden brown colour and unique roast flavours take place at the surface of the product particularly after the smoking- and/or a flavoring-liquid has been sprayed on and the liquid evaporates or has evaporated.

The spraying is preferably carried out in and/or downstream of a first cooking chamber, particularly a cooking chamber in which smoke and/or flavor is applied to the product and more preferably upstream from a second smoking/flavoring chamber, particularly in a straight section between two, preferably helical, chambers. The second chamber is preferably a cooking chamber.

Additionally, the surface of the product may be treated by impingement of the heating gas on the surface of the product.

The feature of having multiple, preferably three, different locations and multiple, preferably temperature oven allows designing the optimum process for browning and smoking processes at high temperatures while the product is cooked simultaneously. Depending on the desired final result and the properties of the food product to be roasted and/or smoked, the suitable application moment within the heat process, the best possible application method and the optimum product for browning, smoking and/or flavouring may be selected. Special calibrated two phase nozzles in combination with specially designed browning agents and smoke condensates allow to fully transfer the highly reactive liquids into gas phase using kinetic and thermal energy.

Another subject matter of the present invention is a process to operate an oven comprising:
- at least one chamber,
- preferably conveyor means for guiding products from the inlet through this chambers to the outlet,
- temperature control means for controlling the temperature and/or humidity in the chamber using a gas, which comprise a heater to heat the gas, a blower and a duct to introduce the heated gas into the chamber,
wherein a smoking- and/or a flavoring-liquid is applied to the product in the oven.

The disclosure made regarding this subject matter of the present invention also applies to the other subject matters of the present application and vice versa.

In the at least one chamber, the product is cooked, i.e. heated to a core-temperature which is desired for the individual product.

Prior and/or while the product is cooked, it is preferably dried.

The smoking and/or drying can take place during the drying and or the cooking.

Preferably, the smoking- and/or a flavoring-liquid is atomized.

Preferably, the smoking- and/or a flavoring-liquid is applied upstream and/or downstream from the blower and/or sprayed directly on the product. More preferably, smoking- and/or a flavoring-liquid is applied with a two-phase-nozzle. As the second phase compressed gas, preferably air, is utilized which is preferably supplied at a pressure between 5 and 7 Bar, preferably 5,5 - 6,5 Bar.

Preferably, a smoking- and/or a flavoring-liquid is sprayed on the product directly and wets the surface of the product and evaporates immediately. During or after the evaporation, preferably the millard-reaction takes place.

According to a preferred or another inventive embodiment of the present invention, the smoke- and/or flavor substance is ab- and/or adsorbed after the product has been at least partially dried. More preferably, at least the surface of the product has been at least partially dried before the smoke- and/or flavor-substance is ad- and/or adsorbed.

Another subject matter of the present invention is a smoke condensate comprising:
Phenols: 0,1 - 0,56 %
Carbonyls: 3,5 - 13,0 %
Polysorbate: 0 - 2,25 %
and the rest water.
The disclosure made regarding this subject matter of the present invention also applies to the other subject matters of the present application and vice versa.

Another preferred or inventive embodiment of the present invention, is a smoke condensate comprising:
Acids: 2,5 - 6,5 %
Phenols: 0,1 - 0,56 %
Carbonyls: 3,5 - 13,0 %
Polysorbate: 0 - 2,25 %
Benzo(a)pyren < 10 ppb
Benzo(a)anthrazen < 20 ppb

The disclosure made regarding this subject matter of the present invention also applies to the other subject matters of the present application and vice versa.

Another preferred or inventive embodiment of the present invention, is a smoke condensate comprising:
Phenol 0,1- 0,35 weight-%
Carbonyl 3,5 - 8,5 weight-%
Polysorbate 0 - 1,5 weight-%

The disclosure made regarding this subject matter of the present invention also applies to the other subject matters of the present application and vice versa.

The inventive smoke condensate does not contaminate the oven and results in a smoking-process that can be well controlled.
The smoke condensate is, for example, produced by condensing smoke resulting from a combustion process. The smoke condensate is preferably filtered and might be concentrated.

The disclosure made regarding this subject matter of the present invention also applies to the other subject matters of the present application and vice versa.

Preferably, the ph-value of the smoke condensate is between 2,0 and 3,5.

The viscosity of the smoke condensate is preferably 4,0 - 5,5 mPas/sec, measured at 20 °C.

The density of the smoke condensate is preferably 1,01 - 1,04 kg/I.

The pH-value of the smoke condensate is preferably 2,0 - 3,5

More preferably, the smoke condensate, at least essentially, does not comprise solid-particles, like ash- and/or tar-particles.

The smoke condensate is preferably atomize and then inserted into the oven.

After atomization, the particle size distribution of the droplet is preferably:

| | |
|---|---|
| < 0,20 µm | 1,99 % |
| < 0,50 µm | 6,26 % |
| < 0,60 µm | 22,48 % |
| < 0,70 µm | 45,89 % |
| < 0,85 µm | 69,37 % |
| < 1,00 µm | 86,70 % |
| < 5,00 µm | 100,00 % |

In the oven 100 % of the smoke condensate is transferred into an invisible gas phase.

The inventions are now explained according to figures 1 - 4. These explanations do not limit the scope of protection. The explanations apply for all inventions of the present application likewise.
- Figure 1: shows one embodiment of the inventive oven.
- Figure 2: is a top view of the oven according to figure 1.
- Figure 3: shows the adjustment means.
- Figure 4: shows the direct application of atomized smoking- and/or a flavoring-liquid to the surface of the product.
- Figure 5: shows a droplet-size distribution of the atomized smoking- and/or a flavoringliquid

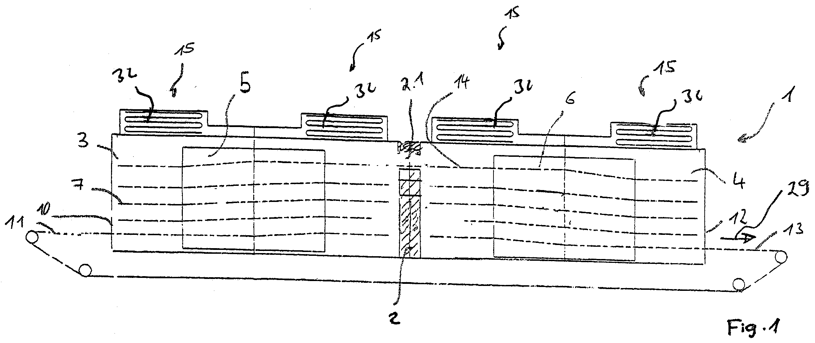

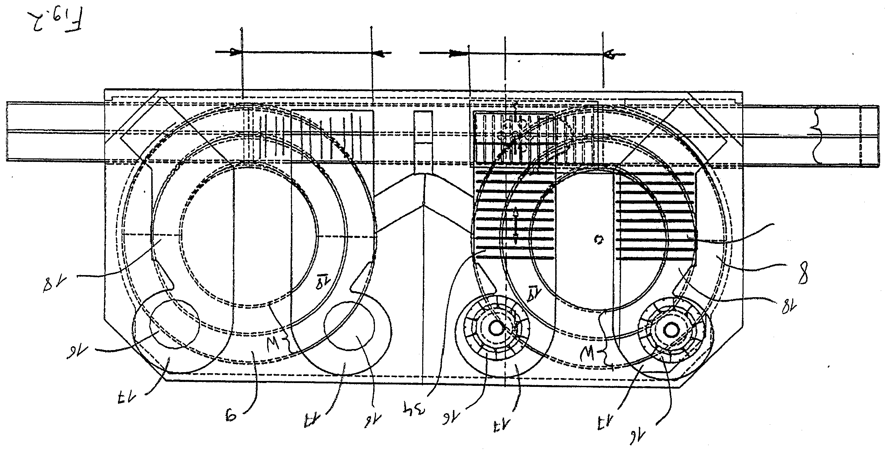

Figures 1 and 2 show the inventive oven. The oven 1 comprises a first chamber 3 and a second chamber 4. The chambers are divided by means of a partition 2. In the present case, a rotatable drum 5, 6 is arranged in each of these chambers, around which the conveyor belt 7 is guided along two helical paths 8, 9. The endless conveyor belt enters the oven 1 via the entrance 10 here by a straight conveyor belt section 11 and leaves the oven 1 via the exit 12, here likewise by means of a straight section 13. The two helical sections 8, 9 are here connected by the straight conveyor belt section 14, which lies at the top. The belt is permeable to the process fluid, e.g. air and steam. The partition means 2 comprise a passage 2.1 for the belt section 14. This passage 2.1 is larger than the conveyor belt 14. The person skilled in the art understands that the oven needs not necessarily comprise two chambers.

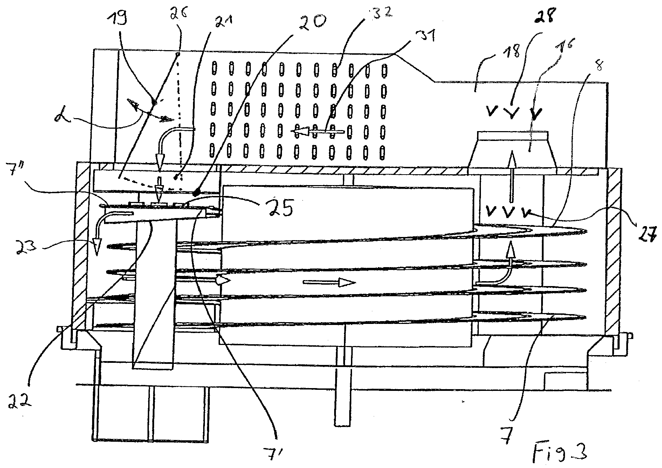

The heating means, which are overall denoted by 15, are arranged in the top of the housing. These heating means 15 each comprise a blower 16 here with a spiral casing 17, which opens into a duct 18. A heating element is situated in the ducts 18, respectively. The process fluid, e.g. air and steam, is sucked up by the blower 16 out of chambers 3, 4 via inlet 24 and is forced into the duct 18 via the spiral casing 17, respectively. The process fluid 31 flows past the heating elements 34 and is then recycled into the respective chamber 3, 4. Arrow 23, according to figure 3, depicts the fluid flow in the chamber 3, 4. The motion of the products (not depicted) to be cooked in the oven is depicted by arrows 29.

According to figure 3 oven may comprise adjustment means to adjust the flow of process fluid over the width of the belt, which is, in the present example a plate 19. This plate 19 is located in the straight part 14 of the conveyor belt 7 and extends over the length L, as can be seen in figure 2. The plate 19 is partially located in the duct 18 and extends into a control area 21. The plate 19 pivots around an axis 26. The degree of deflection relative to its vertical position is depicted by double-arrow α. The plate 19 guides and splits the fluid flow 31 after it has passed the heating means, so that the desired flow pattern over the width of the conveyor belt is achieved. By means of the plate 19, the flow 31 can be split and guided from the outside 7" of belt 7 to the inside 7' and vice versa. Every desired fluid-flow distribution over the width W can be achieved by means of plate 19. Examples for fluid-flow distributions are shown in Figure 7. The desired fluid-flow distribution is achieved over the entire length L of plate 19. Equalization means 20, here a perforated plate, are located at the bottom of the control area 21 to support the flow-distribution of plate 19 and/or increase the pressure in the control area. After the fluid flow has heated products 25, it passes through the permeable belt 7 and is the deflected by an inclined plate 22. The flow 23 inside chamber 3 flows past the helical path 8 and is then sucked up again by blower 16 via inlet 24. The person skilled in the art understands that these adjustment means are not mandatory for the present invention.

According to the present invention, upstream and/or downstream from the blower 16 and/or upstream and/or downstream from the heater 32, means 27, 28 to atomize a smoking- and/or a flavoring-liquid, in the present case one or more two-phase nozzles 27, 28, are provided. The atomized smoking- and/or a flavoring-liquid is provided as a cloud of very fine fluid particles and ejected into the air-stream 31, in which the droplets evaporate before they coalesce. Each two phase nozzle 27, 28 is operated with a pressurized gas (not shown) in order to divide the stream of smoking- and/or a flavoring-liquid into the fine particles and to distribute the droplets in the air-stream 31. The smoking- and/or a flavoring-liquid can be provided to each or only one chamber 3, 4. The smoking- and/or a flavoring-liquid can also be introduced at different locations into the oven. Each chamber can be supplied with the same or differing smoking- and/or a flavoring-liquids. The smoke and/or the flavor is adsorbed by the product here the meat product. The smoking and/or flavoring of the product and the cooking of the product take place simultaneously. This saves time and space.

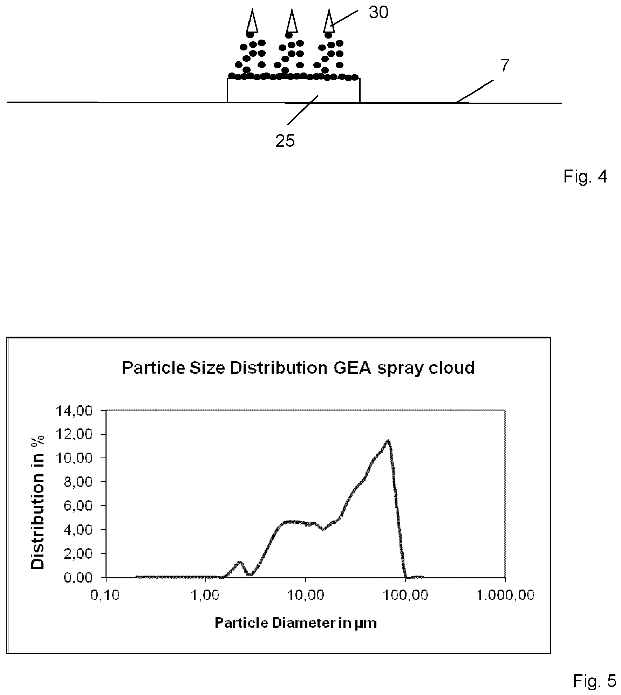

Figure 4 shows an embodiment of the present invention in which the smoking- and/or a flavoring-liquid is directly sprayed on the product. The smoking- and/or a flavoring-liquid-mist hits the product and wets the surface of the product. Subsequently, the liquid evaporates and substances remain on the surface of the product which change the color and/or the flavor of the product. This spraying of a smoking- and/or a flavoring-liquid on the surface of the product can be carried out additionally or alternatively to the smoking and/or flavoring of the product by adsorption. The spraying can be carried out anywhere inside and/or at the exit of the oven. Preferably the distance between the nozzles and the product is between 150 and 350 mm. Preferably, the surface temperature of the product is at least 80°C to facilitate the evaporation of the sprayed on liquid.

Figure 5 shows a preferred droplet size distribution for the spray on application according to figure 4. The droplets are preferably between 1 and 100 µm.

### Reference signs:

- 1: oven
- 2: separation means, partition
- 2.1: passage from first- to second chamber
- 3: first chamber
- 4: second chamber
- 5: drum
- 6: drum
- 7: conveyor means, conveyor belt
- 8: helical section first chamber
- 9: helical section second chamber
- 10: inlet
- 11: straight conveyor means
- 12: outlet
- 13: straight conveyor means
- 14: connecting conveyor means section
- 15: heating means
- 16: blower
- 17: spiral casing
- 18: air duct
- 19: control means, valve
- 20: equalization means
- 21: control area, box
- 22: guiding means
- 23: flow of the fluid
- 24: inlet
- 25: product
- 26: pivot
- 27: nozzle
- 28: nozzle
- 29: motion of the product
- 30: nozzle
- 31: process fluid, air, steam and/or smoke
- 32: heating means

## Claims

1. Oven (1) comprising:
- at least one chamber (3, 4) in which the product is cooked
- conveyor means (7) with for guiding products from the inlet (10) through this chambers (3, 4) to the outlet (12),
- temperature control means (15) for adjusting and controlling the temperature and the humidity in the chamber using air (23) and steam, which comprise a heater (34) to heat the air (23), a blower (16) and a duct (18) to introduce the heated gas into the chamber (3, 4),
wherein it comprises means (27, 28) to atomize a smoking- and/or a flavoring-liquid into the oven,
wherein the means (27, 28) is a two phase nozzle and wherein the conveyor means is an endless belt which is permeable for the air, steam and the smoking- and the flavoring-substance and wherein the oven operates continuously.

2. Oven according to one of the preceding claims, **characterized in, that** a means (27, 28) to provide the smoking- and/or flavoring-liquid into the oven is located at the inlet and/or the outlet of the blower (16).

3. Oven according to one of the preceding claims, **characterized in, that** the smoking- and/or flavoring-liquid is directly sprayed on the product (25).

4. Oven according to claim 3, **characterized in, that** the distance between the means (27, 28) and the product is between 100 - 400 mm, preferably 150 and 350 mm.

5. Oven according to one of the preceding claims, **characterized in, that** it comprises an array of nozzles (27, 28).

6. Process to continuously operate an oven (1) comprising:
- at least one chamber (3, 4) in which the product is cooked
- conveyor means (7) for guiding products from the inlet (10) through this chambers (3, 4) to the outlet (12),
- temperature control means (15) for adjusting and controlling the temperature and humidity in the chamber using air (23) and steam, which comprise a heater (34) to heat the air (23), a blower (16) and a duct (18) to introduce the heated air into the chamber (3, 4),
wherein a smoking- and/or a flavoring-liquid (29) is applied to the product in the oven by a two-phase nozzle (30).

7. Process according to claim 6, **characterized in, that** the smoking- and/or a flavoring-liquid is atomized and preferably fully vaporized.

8. Process according to claims 6 or 7, **characterized in, that** the smoking- and/or a flavoring-liquid is applied upstream and/or downstream from the blower (16) and/or sprayed directly on the product (25).

9. Process according to claims 6 - 8, **characterized in, that** as the second phase compressed gas, preferably air, is utilized which is preferably supplied at a pressure between 5 and 7 bar, preferably 5,5 - 6,5 bar.

10. Process according to one of the preceding claims, **characterized in, that** a smoking- and/or a flavoring-liquid (29) is sprayed on the product (25).

11. Smoke condensate comprising:
Phenols: 0,1 - 0,56 %
Carbonyls: 3,5 - 13,0 %
Polysorbate: 0 - 2,25 %
rest water.

12. Smoke condensate according to claim 11, **characterized in, that** the ph-value is between 2,0 and 3,5.

13. Smoke condensate according to one of the preceding claims, **characterized in, that**, at least essentially, it does not comprise particles, like ash- and/or tar-particles.
